(19) Europäisches Patentamt / European Patent Office / Office européen des brevets

(11) EP 3 069 850 B1

(12) EUROPEAN PATENT SPECIFICATION

(45) Date of publication and mention
of the grant of the patent:
29.08.2018 Bulletin 2018/35

(51) Int Cl.:
B29C 55/14 (2006.01)     B32B 15/085 (2006.01)
C08J 5/18 (2006.01)      B32B 27/32 (2006.01)

(21) Application number: 14862959.5

(22) Date of filing: 21.10.2014

(86) International application number:
PCT/JP2014/077888

(87) International publication number:
WO 2015/072291 (21.05.2015 Gazette 2015/20)

(54) **BIAXIALLY ORIENTED POLYPROPYLENE FILM AND METHOD FOR PRODUCING SAME**

BIAXIAL AUSGERICHTETER POLYPROPYLENFILM UND VERFAHREN ZUR HERSTELLUNG DAVON

FILM DE POLYPROPYLÈNE BIAXIALEMENT ORIENTÉ ET SON PROCÉDÉ DE PRODUCTION

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 14.11.2013 JP 2013235620

(43) Date of publication of application:
21.09.2016 Bulletin 2016/38

(73) Proprietor: Toray Industries, Inc.
Tokyo 103-8666 (JP)
(72) Inventors:
• IMANISHI, Yasuyuki
  Otsu-shi
  Shiga 520-8558 (JP)
• OHKURA, Masatoshi
  Otsu-shi
  Shiga 520-8558 (JP)

(74) Representative: Webster, Jeremy Mark et al
Mewburn Ellis LLP
City Tower
40 Basinghall Street
London EC2V 5DE (GB)
(56) References cited:
EP-A1- 1 990 353     WO-A1-2012/002123
JP-A- H1 167 580     JP-A- H11 273 990
JP-A- 2002 234 124   JP-A- 2011 122 142

**Description**

Technical Field

The present invention relates to biaxially orientated polypropylene film suitable for packaging and industrial uses, which is produced by stretching a polypropylene resin sheet biaxially in the longitudinal direction (MD) and in the width direction (TD) and more specifically relates to biaxially orientated polypropylene film suitable for high performance capacitor uses that can maintain voltage resistance as capacitor dielectric material, as well as a production method therefor.

Background Art

Having high transparency, good mechanical characteristics, and good electric characteristics, biaxially orientated polypropylene film has been applied in various fields including packaging materials, tape materials, and electric materials such as cable wrapping and capacitors.

In the field of capacitor application, in particular, such film has been preferred for high voltage capacitors, for both direct current and alternating current, because of its good voltage resistance characteristics and low loss characteristics.

In recent years, increasing numbers of electric devices have been replaced with inverter-based ones and accordingly, there are stronger demands for smaller-sized, larger-capacity capacitors. To meet demands in their markets, particularly for automobiles (including hybrid cars), photovoltaic power generators, and wind turbine generators, there is an urgent demand for biaxially orientated polypropylene film products that have improved voltage resistance and further reduced thicknesses while maintaining high productivity and processability.

Such biaxially orientated polypropylene film is required to have high in-plane rigidity from the viewpoint of voltage resistance, productivity, and processability, and in particular, it is important to have high width-directional rigidity to ensure improved voltage resistance. However, rigidity enhancement of film requires setting a high draw ratio in the film production process, which may cause decreasing in productivity by film breakage and an increasing heat shrinkage which is a film characteristic that conflicts with rigidity. In practical applications, therefore, it is not enough in terms of capacity reduction and/or dimensional stability at high temperatures (see, for example, patent documents 1 to 5). Under the recent high-temperature process conditions of capacitor manufacturing, the capacitors are required to have further improved heat resistance and voltage resistance and accordingly, demands are increasing for films that have both high dimensional stability and high rigidity.

Prior Art Documents

Patent document 1: JP-A- H11-67580;
Patent document 2: JP-A- H11-273990;
Patent document 3: WO 2004/084242;
Patent document 4: JP-A-2005-64067; and
Patent document 5: JP-A-2007-169595.

EP-A-1990353 discloses a capacitor film comprising biaxially orientated polypropylene having a draw ratio of at least 4.0 in both the machine and transverse directions.

JP-A-2002-234124 proposes a biaxially orientated polypropylene film having a tensile modulus of 3.5GPa or more in the longitudinal direction.

EP-A-2590191 and JP-A-2011-122142 disclose a biaxially oriented polypropylene film having certain forms of projections on each surface.

Problems to be solved by the Invention

The present inventors have arrived at the present invention as a result of intensive studies aiming to solve the above problems. The present invention provides biaxially orientated polypropylene film that can have high voltage resistance and reliability at high temperatures when used for capacitors designed for high voltages and that has both high dimensional stability and high rigidity required for capacitor production.

Means of Solving the Problems

The above problems can be solved by biaxially orientated polypropylene film that has stress (TD-F5 value) of more than 100 MPa for 5% elongation in the film's width direction and heat shrinkage of only 2% or less in the film's longitudinal direction when heat-treated at 120°C for 15 minutes.

Advantageous Effect of the Invention

The present invention can provide biaxially orientated polypropylene film that has both high dimensional stability and high rigidity and is applicable to various fields including packaging materials, tape materials, and electric materials such as cable wrapping and capacitors, and
in particular, it is useful for capacitor application , particularly for automotive, photovoltaic power generation, and wind power generation.

Description of Preferred Embodiments

An important feature of the biaxially orientated polypropylene film according to the present invention is to have stress (TD-F5 value) of more than 100 MPa at 5% elongation in the film's width direction. If the TD-F5 value is 100 MPa or less, the film may suffer from decrease in voltage resistance or decrease in wind-up properties due to wrinkles generated in film metallized step by vapor deposition or a capacitor element wind-up step, or lead to a capacitor with a poor voltage resistance due to aeration attributable to wrinkles. From the above point of view, the TD-F5 value is preferably 105 MPa or more, more preferably 110 MPa or more, still more preferably 115 MPa or more. There are no specific limitations on the upper limit, but it should be 150 MPa from the viewpoint of stability during film production. As a result of intensive studies, the inventors have found that there is a strong correlation between the film's voltage resistance and TD-F5 value and that it is important to control the TD-F5 value at high level in order to improve the voltage resistance.
To resist the recent high temperature process conditions used for capacitor production, it is important for the biaxially orientated polypropylene film according to the present invention to set heat shrinkage of only 2% or less in the film's longitudinal direction when heat-treated at 120°C for 15 minutes. If the heat shrinkage exceeds 2% in a capacitor manufacturing process that involves heat treatment of capacitor elements, the film layers wound-up in the capacitor can be tightened too strongly so that the layer-to-layer distance decreases to come into close contact with each other, possibly leading to a decrease in voltage resistance at the time of self-healing due to difficulty in escape by the resulting gas and scattered metal from the system. If the heat shrinkage is large in the expanding direction (i.e., a large negative value), on the other hand, the wound element may loosen due to heat applied when producing or using the capacitor and therefore, it is preferably in the range of -0.5% to 1.8%, more preferably - 0.2% to 1.7%, still more preferably 0.0% to 1.6%.
Here, it is preferable for the biaxially orientated polypropylene film according to the present invention to have both of the above requirements for the stress (TD-F5 value) at 5% elongation in the film's width direction and the heat shrinkage in the film's longitudinal direction during heat treatment at 120°C lasting for 15 minutes. This can be achieved by, for example, controlling the tension between the longitudinal drawing step and the transverse drawing step in the production process or annealing the product film roll, as described in detail later.
An important feature of the biaxially orientated polypropylene film according to the present invention is to have stress (MD-F5 value) of 58 MPa or more for 5% elongation in the film's longitudinal direction. If the MD-F5 value is less than 58 MPa, the film may suffer from decrease in wind-up properties due to wrinkles generated in a capacitor element wind-up step or lead to a capacitor with a poor voltage resistance due to contamination of air attributable to wrinkles. From the above point of view, the MD-F5 value is preferably 60 MPa or more, more preferably 62 MPa or more, still more preferably 64 MPa or more. There are no specific limitations on the upper limit, but it should be 100 MPa or less from the viewpoint of stability during film production.
For the biaxially orientated polypropylene film according to the present invention, the total of the stress at 5% elongation in the film's longitudinal direction (MD-F5 value) and that in the width direction (TD-F5 value) is preferably 160 MPa or more, more preferably 170 MPa or more, still more preferably 180 MPa or more, from the viewpoint of improving the voltage resistance. There are no specific limitations on the upper limit, but it should be 250 MPa or less from the viewpoint of stability during film production.
For the biaxially orientated polypropylene film according to the present invention, the heat shrinkage in the film's width direction during heat treatment at 120°C lasting for 15 minutes is preferably 1% or less, more preferably 0.8% or less, still more preferably 0.6% or less. If the heat shrinkage is more than 1%, the film itself may suffer from shrinkage due to the heat applied when producing or using the capacitor, possibly leading to decrease in voltage resistance as a result of poor contact with the metallikon at the ends of the element. There are no specific limitations on the lower limit, but it is preferably -1% because the wound element may loosen due to the heat applied when producing or using the capacitor if the film expands excessively.

Described next is preferable straight-chain polypropylene used to produce the biaxially orientated polypropylene film according to the present invention. Straight-chain polypropylene is generally used as material for producing packaging and capacitors, but the material to be used here is preferably one having a cold xylene soluble fraction (hereinafter CXS) of 4 mass% or less and a mesopentad fraction of 0.95 or more. If these requirements are not met, the material may be inferior in film production stability, may suffer from the formation of voids when processed into biaxially orientated film, or may be poor in dimensional stability and voltage resistance.

Here, the cold xylene soluble fraction (CXS) is the polypropylene component which is still dissolved in xylene when being precipitated at room temperature after making the film completely dissolved in xylene, and is considered to be the fraction which is low in crystallizability because of, for example, low stereoregularity or low molecular weight. A film of resin that contains these components in large amounts can have problems such as poor dimensional stability and low dielectric breakdown voltage at high temperatures. Accordingly, the CXS is preferably 4 mass% or less, more preferably 3 mass% or less, particularly preferably 2 mass% or less. Straight-chain polypropylene with such a CXS can be produced by preparing resin with enhanced catalytic activity or by washing the resulting resin with a solvent or the propylene monomer itself.

From the same point of view, the straight-chain polypropylene preferably has a mesopentad fraction of 0.95 or more, more preferably 0.97 or more. The mesopentad fraction is an indicator that represents the stereoregularity of the crystalline phase in polypropylene measured by nuclear magnetic resonance analysis (NMR analysis) and a larger value suggests a higher degree of crystallinity, higher melting point, and higher dielectric breakdown voltage at high temperatures, which are preferred. There are no specific limitations on the upper limit of the mesopentad fraction. Preferred methods for producing such high-stereoregularity resin include a method in which powder of resin is washed with a solvent such as n-heptane, a method that uses an appropriately selected catalyst and/or co-catalyst and a method that adopts an appropriately selected composition.

From the viewpoint of film production performance, such straight-chain polypropylene more preferably has a melt flow rate (MFR) of 1 to 10 g/10 min (230°C, 21.18 N load), particularly preferably in the range of 2 to 5 g/10 min (230°C, 21.18 N load). Control of the melt flow rate (MFR) in the above range is realized by, for example, controlling the average molecular weight and molecular weight distribution.

Such a straight-chain polypropylene material is composed mainly of a propylene homopolymer, but may contain other unsaturated hydrocarbon based copolymerization components or may be blended with a polymer that is not a propylene homopolymer, unless they impair the purpose of the present invention. Useful copolymer components and useful monomer components for such blending include, for example, ethylene, propylene (for a copolymerized blend), 1-butene, 1-pentene, 3-methylpentene-1,3-methylbutene-1,1-hexene, 4-methylpentene-1,5-ethylhexene-1,1-octene, 1-decene, 1-dodecene, vinyl cyclohexene, styrene, allyl benzene, cyclopentene, norbornene, and 5-methyl-2-norbornene. In regard to the copolymerization fraction and blending fraction, it is preferable that the copolymerization fraction be less than 1 mol% and the blending fraction be less than 10 mass% from the viewpoint of dielectric breakdown resistance and dimensional stability.

Furthermore, such straight-chain polypropylene may also contain various additives such as crystal nucleating agent, antioxidant, thermal stabilizer, lubricant, antistatic agent, antiblocking agent, filler, viscosity adjustor, and color protection agent unless they impair the purpose of the present invention.

If an antioxidant is to be used, it is important to identify the appropriate type and quantity of it from the viewpoint of long term heat resistance. More specifically, the antioxidant to be used is preferably a phenolic one with steric hindrance and at least one of those used is preferably of a high-molecular-weight type with a molecular weight of 500 or more. Various specific examples can be given, but it is preferable to use, for example, 2,6-di-t-butyl-p-cresol (BHT: molecular weight 220.4) in combination with 1,3,5-trimethyl-2,4,6-tris-(3,5-di-t-butyl-4-hydroxybenzyl) benzene (for example, Irganox (registered trademark) 1330, manufactured by Ciba Geigy, molecular weight 775.2) or tetrakis [methylene-3(3,5-di-t-butyl-4-hydroxyphenyl) propionate] methane (for example, Irganox (registered trademark) 1010 manufactured by Ciba Geigy, molecular weight 1177.7). The total content of these antioxidants is preferably in the range of 0.03 to 1.0 mass% of the total quantity of polypropylene. The long term heat resistance may decrease if the antioxidant content is too small. If the antioxidant content is too large, bleed-out of these antioxidants may cause blocking at high temperatures, possibly having an adverse influence on the capacitor element. The content is more preferably 0.1 to 0.9 mass%, particularly preferably 0.2 to 0.8 mass%.

Furthermore, the biaxially orientated polypropylene film according to the present invention may contain branched-chain polypropylene (H) from the viewpoint of improving the voltage resistance , and if contained, it preferably accounts for 0.05 to 10 mass%, more preferably 0.5 to 8 mass%, still more preferably 1 to 5 mass%. The branched-chain polypropylene (H), if contained, serves to easily allow spherulites with small controlled sizes to be formed when cooling the melt-extruded resin sheet and reduce the formation of insulation defects to a low level in the stretching step, thereby resulting in polypropylene film with high voltage resistance.

Furthermore, it is preferable for the film according to the present invention to be composed mainly of mixture of straight-chain polypropylene and the branched-chain polypropylene (H). In this case, the branched-chain polypropylene (H) particularly preferably has the following relation of the melt tension (MS) and melt flow rate (MFR) measured at 230°C: log(MS) > -0.56 log(MFR) + 0.74.

To produce branched-chain polypropylene (H) with melt tension (MS) and melt flow rate (MFR) as measured at 230°C that have the relation [log(MS) > -0.56 log(MFR) + 0.74], available methods include a method of blending with a polypropylene material that contains large amounts of high-molecular weight components, a method of adding an oligomer or polymer that has a branched structure, a method of introducing a branched long chain structure into the polypropylene molecule as described in Japanese Unexamined Patent Publication (Kokai) No. SHO 62-121704, and a method as described in Japanese Patent No. 2869606.

Here, the melt tension measured at 230°C is determined from the melt flow rate (MFR) measured according to JIS-K7210 (1999). Specifically, polypropylene is heated 230°C using a melt tension tester manufactured by Toyo Seiki Seisaku-sho, Ltd. and the melted polypropylene is discharged at an extrusion speed of 15 mm/min to produce a strand. As this strand is taken up at a speed of 6.4 m/min, the tension is measured to represent the melt tension (in cN). In addition, the melt flow rate (MFR) measured at 230°C is determined according to JIS-K7210 (1999) under a load of 21.18 N (in g/10 min).

There are no specific limitations on the branched-chain polypropylene (H) although it preferably meets the above relation. From the viewpoint of film production performance, the melt flow rate (MFR) is preferably in the range of 1 to 20 g/10 min, more preferably in the range of 1 to 10 g/10 min. Furthermore, it preferably has a melt tension in the range of 1 to 30 cN, more preferably in the range of 2 to 20 cN. The branched-chain polypropylene (H) referred to here is a polypropylene that contains five or less internal trisubstituted olefins for every 10,000 carbon atoms. The existence of such an internal trisubstituted olefin can be examined based on the proton ratio in the $^1$H-NMR spectrum.

For the present invention, a crystal nucleating agent may be added unless it impairs the purpose of the present invention. As described previously, the branched-chain polypropylene (H) itself has α- or β-crystal nucleation effect, but useful agents include, for example, other α-crystal nucleating agents (dibenzylidene sorbitols, sodium benzoate, etc.), β-crystal nucleating agents (potassium 1,2-hydroxystearate, magnesium benzoate, N,N'-dicyclohexyl-2,6-naphthalene dicarboxamide, other amide-based compounds, quinacridone-based compounds, etc.). However, excessive addition of such other nucleating agents can cause a decrease in stretching performance and a decrease in voltage resistance due to void formation etc. and therefore, their content is commonly 0.5 mass% or less, preferably 0.1 mass% or less, more preferably 0.05 mass% or less, relative to the total quantity of polypropylene.

Having a constitution that enables high-rigidity and dimensional stability, the biaxially orientated polypropylene film according to the present invention is so high in voltage resistance and handleability as to serve suitably for production of thin film capacitors, and in particular, its performance is displayed effectively when the film thickness is in the range of 0.5 μm or more and less than 3 μm. The thickness is more preferably 0.8 μm or more and less than 2.8 μm and the thickness is still more preferably 1 μm or more and less than 2.6 μm.

The biaxially orientated polypropylene film according to the present invention is preferred as dielectric film for capacitors, though not limited to any specific capacitor type. Specifically, in regard to the electrode structure, it can be applied to wound foil capacitors, metal vapor deposited film capacitors, oil impregnated capacitors which are impregnated with insulating oil, and dry capacitors which are completely free of insulating oil. In regard to the shape, they may be of a wound type or of a laminated type. In view of its characteristics, however, the film according to the present invention is particularly preferred as a component of metal vapor deposited film capacitors.

Polypropylene film is commonly small in surface energy and difficult to treat stably for metal deposition and therefore, it is preferable to subject it to surface treatment in advance in order to increase the metal adhesion strength. Specifically examples of such surface treatment include corona discharge treatment, plasma treatment, glow treatment, and flame treatment. Commonly, polypropylene film has a surface wetting tension of about 30 mN/m, but in order to ensure strong adhesion to metal layer and high level of safety, it is preferable to perform these surface treatment techniques to achieve a surface wetting tension of about 37 to 50 mN/m, preferably 39 to 48 mN/m.

The biaxially orientated polypropylene film according to the present invention can be produced by using a material having characteristics as described above and performing a biaxial stretching step. Useful biaxial stretching methods include inflation simultaneous biaxial stretching, stenter simultaneous biaxial stretching, and stenter sequential biaxial stretching, of which the stenter sequential biaxial stretching technique is preferred from the viewpoint of film production stability, thickness uniformity, and control of film's high rigidity and dimensional stability.

Described next is the production method for biaxially orientated polypropylene film according to the present invention. First, polypropylene resin is melt-extruded onto a support to produce a polypropylene resin sheet and this polypropylene resin sheet is subjected to sequential biaxial stretching in the order of longitudinal drawing and transverse drawing, followed by heat treatment and relaxation treatment to provide biaxially orientated polypropylene film. In this process, the film conveyance speed at the entrance of the transverse drawing step is set at 99.9% to 97.0% of the film conveyance speed at the exit of the longitudinal drawing step. Then, transverse drawing is performed with the film edges held with clips, and in the next step, heat treatment and relaxation treatment are performed while holding the film with clips under tension in the width direction. Specific steps are described below, but the invention is not limited thereto.

First, straight-chain polypropylene is mixed with high melt tension polypropylene (branched-chain polypropylene (H)) and the mixture is melt-extruded, filtrated through a filter, extruded through a slit die at a temperature of 230°C to 260°C, and solidified on a cooling drum controlled in the temperature range of 60°C to 110°C to provide an unstretched sheet. Useful methods to bring the sheet into strong contact with the casting drum include the application of static electricity, use of surface tension of water, air knife method, press roll method, and casting into water, of which the air knife method is preferred because it can produce a highly planar surface and control the surface roughness. Here, the air knife preferably feeds air at an air temperature of 0°C to 100°C, preferably of 20°C to 70°C, at a speed of 130 to 150 m/s and the air knife preferably has a double pipe structure to ensure improved uniformity in the width direction. Furthermore, it is preferable for the position of the air knife to be adjusted appropriately so that the air will flow downstream of the film, thereby preventing vibration of the film.

Then, this unstretched film is stretched biaxially to achieve biaxial orientation. First, the unstretched film is preheated as it passes between rolls maintained at 120°C to 150°C and then the sheet is stretched 2 to 8 times in the longitudinal direction while maintaining the temperature at 130°C to 150°C, followed by cooling to room temperature. In this step, it is preferable to stretch the sheet at a draw ratio of 3 to 6 in the longitudinal direction and then cool it to room temperature. There are no specific limitations on the stretching method or the draw ratio and appropriate ones may be adopted to meet the polymer characteristics. Subsequently, the stretched film was introduced into a stenter and stretched further in the transverse direction. Here, it is preferable that the film conveyance speed at the entrance of the transverse drawing step beset at 99.9% to 97.0% of the film conveyance speed at the exit of the longitudinal drawing step in order to ensure that the stress (TD-F5 value) at 5% width-directional elongation of the biaxially oriented polypropylene film according to the present invention is more than 100 MPa while at the same time the heat shrinkage in the film's longitudinal direction after heat treatment at 120°C lasting for 15 minutes is 2% or less.

If the film conveyance speed at the entrance of the transverse drawing step is in the above range relative to the film conveyance speed at the exit of the longitudinal drawing step, the strain in the longitudinal direction can be released and crystals are oriented regularly in the width direction in the transverse drawing step, thereby ensuring relaxation of the heat shrinkage in the longitudinal direction of the biaxially oriented polypropylene film and an increase in the rigidity in the width direction. If the film conveyance speed at the entrance of the transverse drawing step is less than 97.0% of the film conveyance speed at the exit of the longitudinal drawing step, the film may slacken in the relevant section or the rigidity in the longitudinal direction of the biaxially oriented polypropylene film may decrease, possibly leading to a film with decreased in-plane rigidity and poor voltage resistance. If the film conveyance speed at the entrance of the transverse drawing step is more than 99.9% of the film conveyance speed at the exit of the longitudinal drawing step, on the other hand, the film may break in the relevant section or the resulting film may not be sufficiently large in rigidity in the width direction or may be poor in voltage resistance. From this point of view, it is preferable for the film conveyance speed at the entrance of the transverse drawing step to be 99.7% to 97.5%, more preferably 99.5% to 98.0%, of the film conveyance speed at the exit of the longitudinal drawing step.

Next, transverse drawing is performed at a temperature of 140°C to 165°C with the film edges held with clips to achieve 7- to 13-times stretching in the width direction and then, while still holding the film with clips under tension in the width direction, heat fixation is performed at a temperature of 140°C to 165°C while relaxing the film by 2% to 20% in the width direction, followed by cooling it at 100°C to 150°C, moving it out of the stenter, removing the clips from the film's edges, and slitting the film's edges while taking it up into a film roll in the wind-up step. Here, before winding up the film, the surface on which metal is to be deposited is preferably subjected to corona discharge treatment in air, nitrogen, carbon dioxide gas, or a mixture thereof in order to ensure good adhesion with deposited metal.

In addition, it is preferable to perform annealing treatment to meet both of the requirements for the biaxially orientated polypropylene film according to the present invention: the stress (TD-F5 value) at 5% elongation in the film's width direction is more than 100 MPa and the heat shrinkage in the film's longitudinal direction after heat treatment at 120°C lasting for 15 minutes is 2% or less.

Described next is a production method for the biaxially oriented polypropylene film characterized in that the biaxially oriented polypropylene film is subjected to annealing treatment and that the annealing treatment is performed, after the aforementioned relaxation treatment, for 3 to 100 hours in an atmosphere at a temperature more than 50°C and 100°C or less.

As generally known, polypropylene film is commonly annealed at 20°C to 50°C, but for the present invention, annealing treatment is preferably performed in the temperature range of more than 50°C and 100°C or less in order to produce biaxially oriented polypropylene film with increased rigidity and dimensional stability. This annealing treatment is preferably performed after the aforementioned relaxation treatment conducted in the width direction. For example, sheet-like film may be cut in a desired size and subjected to treatment in a sheet-like form, or film may be wound on a core to prepare a roll and subjected to treatment in the form of a roll. If the temperature is more than 100°C, the film may suffer a decrease in rigidity, or, if in the form of a roll product, may suffer tightening of wound film layers, wrinkles, blocking between film layers, or the like, caused by thermal deformation of the film. If annealing temperature is 100°C or less, on the other hand, depression of heat shrinkage due to amorphous relaxation and improvement in rigidity due to crystallization take place efficiently. From this point of view, the annealing treatment is preferably performed at a temperature of 60°C to 90°C, more preferably 70°C to 85°C. In terms of duration, it is preferable for the treatment to be performed in an atmosphere as described above for 3 to 100 hours, more preferably 6 to 75 hours, still more preferably 8 to 50 hours. The voltage resistance will be poor if the treatment time is less than 3 hours while if the treatment time is more than 100 hours, on the other hand, the film may suffer a decrease in voltage resistance as a result of a decrease in rigidity caused by excessive relaxation and, if in the form of a roll product, may suffer tightening of wound film layers, wrinkles, blocking between film layers, or the like, caused by thermal deformation of the film.

For the present invention, it is preferable for the annealing treatment to be performed before forming a vapor deposited layer on the film surface to produce metal-layer-laminated film. This is because the generation of wrinkles can be depressed before forming a vapor-deposited layer and the voltage resistance can be increased effectively.

For the present invention, there are no specific limitations on the method to be used to produce metal-layer laminated film by forming metal layer on the surface of the biaxially orientated polypropylene film, and a preferred technique is, for example, to deposit aluminum etc. on at least one side of polypropylene film, thus producing metal-layer-laminated film such as aluminum-deposited film to serve as internal electrode of a film capacitor. In this instance, another metal component such as, for example, nickel, copper, gold, silver, chromium, and zinc may be deposited simultaneously with or subsequent to aluminum deposition. In addition, a protective layer of oil etc. may be formed on the vapor deposited film.

For the present invention, the formation of metal film may be followed, as required, by annealing treatment or heat treatment of the metal-laminated film at a specific temperature. For insulation or other purposes, furthermore, at least one surface of the metal-layer-laminated film may be coated with, for example, polyphenylene oxide.

Metal-layer-laminated film thus obtained may be laminated or wound by various methods to provide film capacitors. A preferred production method for wound type film capacitors is described below.

Aluminum is deposited on one side of polypropylene film under reduced pressure. In doing this, deposition is performed in a stripe-like form having margins running in the film's longitudinal direction. A knife is put into the center of each marginal space and the center of each metal deposited area to slit the film to produce reels of tape having a marginal space along one edge of the surface. Thus, reels of tape having a marginal space along either right- or left-hand, edge are obtained. The tape with a margin on the left-hand edge and the tape with a margin on the right-hand edge are put one on top of the other in such a manner that the metal deposited area sticks out of the marginal space in the width direction, and then they are wound up to provide a roll.

In the case where metal is deposited on both surfaces, one surface is metalized in a stripe-like form so that margins run in the longitudinal direction while the other surface is metalized in a stripe-like form so that a margin runs in the longitudinal direction along the center of the metalized area on the former surface. Then, a knife is put into the center of each marginal space on each surface to slit the film to provide reels of tape each having a margin along either edge of each surface (for example, a margin on the right-hand side of a surface and a margin on the left-hand side of the other surface). One of the resulting reels is combined with deposit-free composite film in such a manner that the metalized film sticks out of the composite film in the width direction, and then they are wound up to provide a roll.

After removing the core, the wound-up body thus prepared is pressed and an external electrode is formed at each end face by thermal metal spraying, followed by welding a lead wire to each external electrode to provide a wound type film capacitor. Film capacitors have been used in a variety of fields including railroad vehicles, automobiles (hybrid cars, electric vehicles), photovoltaic power generators, wind power generators, and general home electric appliances, and the film capacitor according to the present invention can also be applied favorably to these uses.

The methods for measurement of characteristic values and methods for evaluation of effects used for the present invention are as described below.

(1) Thickness of film

The thickness was measured at a total of 10 arbitrarily selected positions using a Litematic VL-50A contact type film thickness gauge (10.5 mm diameter ultra-hard spherical body surface measuring head, measuring load 0.06 N) manufactured by Mitutoyo Corporation, and the average was taken as the thickness of the biaxially orientated polypropylene film.

(2) Stress at 5% elongation in the length and width directions (MD-F5 value and TD-F5 value)

For each of the length and the width direction of biaxially orientated polypropylene film, a rectangular piece with a length (test direction) of 150 mm and a width of 10 mm was cut out to provide a specimen. A film was subjected to tensile test using a tensile tester (Tensilon tester AMF/RTA-100, manufactured by Orientec Co., Ltd.) under the conditions of an initial chuck distance of 50 mm and a tension speed of 300 mm/min. The load applied to the film at 5% elongation was read and divided by the cross section area (film thickness $\times$ width (10 mm)) of the specimen measured before the test to determine the stress at 5% elongation. For each specimen, 5 measurements were taken and the average was taken for evaluation.

The thickness of each film specimen used for calculating the MD-F5 value or the TD-F5 value was measured by the following procedure. A rectangular piece with a size of length 150 mm × width 10 mm was cut out to prepare a specimen and its thickness was measured at arbitrarily selected 5 positions in the initial chuck distance of 50 mm using a Litematic VL-50A contact type film thickness gauge (10.5 mm diameter ultra-hard spherical body surface measuring head, measuring load 0.06 N) manufactured by Mitutoyo Corporation, and the average was used.

(3) Heat shrinkage in the length and width directions after heat treatment at 120°C lasting for 15 minutes

For each of the length and width directions of film, 5 specimens each with a width of 10 mm and a length (measuring direction) of 200 mm were cut out and the position 25 mm from each end was marked to define a test length ($l_0$) of 150 mm. Subsequently, a test piece was sandwiched between paper sheets and, without applying a load, heated for 15 minutes in an oven maintained at 120°C. It is then taken out and cooled at room temperature, followed by measuring the length ($l_1$) and calculating the heat shrinkage by the following equation. The average of 5 measurements was adopted.

$$\text{Heat shrinkage} = \{(l_0 - l_1) / l_0\} \times 100\ (\%)$$

(4) Dielectric breakdown voltage of film (V/$\mu$m)

According to the method (flat plate electrode method) specified in 6.2.b of JIS C-2330 (2010), the average was determined and divided by the measured film thickness ($\mu$m) of the sample and the value was expressed in V/$\mu$m.

(5) Evaluation of characteristics of metallized capacitor (voltage resistance and reliability at 105°C)

On the film obtained in each Example and Comparative example described later, aluminum was vacuum-deposited so as to achieve a film resistance of 8 $\Omega$/square, by a vacuum deposition apparatus manufactured by ULVAC, in a so-called T-type margin pattern having a margin in the direction perpendicular to the longitudinal direction to provide a reel of metallized film with a width of 50 mm.

Then, using this reel, a capacitor element was made by wound-up by an element winding-up machine (KAW-4NHB) manufactured by Kaido Mfg. Co., Ltd., which was then subjected to thermal metal spraying and heat treatment under reduced pressure at a temperature of 105°C for 10 hours, followed by attaching lead wires to produce a capacitor element. The capacitor element had an electrostatic capacity of 5 $\mu$F.

Ten capacitor elements thus obtained were adopted and a voltage of 300 VDC was applied to the capacitor elements at a high temperature of 105°C. After maintaining the voltage for 10 minutes, the applied voltage was increased stepwise at a rate of 50 VDC/min. This step-like heating was repeated to conduct so-called step-up test. Changes in electrostatic capacity during this test were measured and plotted on a graph and the voltage at which the electrostatic capacity reached 70% of the initial value was divided by the film thickness (described previously) to determine the voltage resistance of the capacitor. A capacitor having a voltage resistance of 450 V/$\mu$m or more was judged as having practical quality. Furthermore, the voltage was increased until the electrostatic capacity decreased to 10% or less of the initial value and the capacitor element were disassembled to examine the state of destruction, followed by evaluating the safety properties as described below.

AA: Free from changes in element shape and free from observable penetrating destruction.
A: Free from changes in the element shape, but suffering from penetrating destruction through not more than 10 film layers.
B: Suffering from observable changes in element shape or observable penetrating destruction through more than 10 film layers.
C: Suffering from destruction of element shape.

Products ranked as AA can be used without problems and those ranked as A can be used under favorable conditions. Those ranked as B or C will not serve for practical uses. Examples

The advantageous effect of the invention is described in more detail below with reference to Examples.

(Example 1)

A polypropylene resin product manufactured by Prime Polymer Co., Ltd. that had a mesopentad fraction of 0.985 and a melt mass flow rate (MFR) of 2.6 g/10 min, used as straight-chain polypropylene component, was blended with 1.0 mass% of a branched-chain polypropylene resin product manufactured by Basell (high melt tension polypropylene, Profax PF-814), supplied to an extruder at a temperature of 250°C, and melt-extruded at a resin temperature of 250°C from a T-type slit die to provide a sheet. Using an air knife, the molten sheet was brought into close contact with a casting drum maintained at 90°C, thereby cooling and solidifying it to provide an unstretched sheet. Subsequently, the sheet was preheated gradually to 140°C using a group of several rolls and, while being maintained at a temperature of 145°C, passed between rolls with different circumferential speeds to achieve 4.8-times stretching in the longitudinal direction. The film conveyance speed at the entrance of the transverse drawing step was maintained at 99.0% of the film conveyance speed at the exit of the longitudinal drawing step and the film was subsequently introduced into a stenter, where it was stretched 10 times in the width direction at a temperature of 158°C, heat-treated at 155°C while being relaxed by 6% in the width direction, cooled at 100°C, then subjected to corona discharge treatment of the film surface (the surface in contact with the casting drum) in air at a processing strength of 25W·min/m$^2$ to provide film with a film thickness of 2.4 μm, which was wound into a film roll. This film roll was then slit to a width of 650 mm to obtain a roll product of film with a length of 5,000 m. Subsequently, the film was annealed for 10 hours in an 80°C atmosphere in an annealing chamber to provide biaxially oriented polypropylene film. Its film characteristics and capacitor characteristics are given in Table 1, showing that it was high in both voltage resistance and reliability.

(Examples 2 to 5 and Comparative examples 1, 3, and 4)

Except for annealing a product roll under treatment conditions as specified in Table 1, the same procedure as in Example 1 was carried out to produce biaxially stretched polypropylene film. The biaxially oriented polypropylene film samples prepared in Examples 2 to 5 showed film characteristics and capacitor characteristics as given in Table 1, indicating that they were high in both voltage resistance and reliability. The biaxially oriented polypropylene film samples prepared in Comparative examples 1 and 3 showed film characteristics and capacitor characteristics as given in Table 2, indicating that they were below practically satisfactory level due to low voltage resistance and slightly poor reliability. The biaxially oriented polypropylene film sample prepared in Comparative example 4 showed film characteristics and capacitor characteristics as given in Table 2, indicating that film layers suffered blocking and evaluation was inexecutable as a result of an excessively high annealing temperature.

(Example 6)

Except for omitting the annealing of the product roll, the same procedure as in Example 1 was carried out to produce biaxial stretched polypropylene film. The biaxially oriented polypropylene film sample prepared in this Example showed film characteristics and capacitor characteristics as given in Table 1, indicating that it was high in voltage resistance and can be reliable depending on use conditions.

(Example 7)

Except for stretching the film 5.5 times in the longitudinal direction in the longitudinal drawing step of the film production and annealing the product roll under treatment conditions as specified in Table 1, the same procedure as in Example 1 was carried out to produce biaxial stretched polypropylene film. The biaxially oriented polypropylene film sample prepared in this Example showed film characteristics and capacitor characteristics as given in Table 1, indicating that it was high in both voltage resistance and reliability.

(Comparative example 2)

Except that the film conveyance speed at the entrance of the transverse drawing step was maintained at 100.2% of the film conveyance speed at the exit of the longitudinal drawing step and that the product roll was not annealed, the same procedure as in Example 1 was carried out to produce biaxial stretched polypropylene film. The biaxially orientated polypropylene film sample prepared in this Comparative example showed film characteristics and capacitor characteristics as given in Table 2, indicating that it was low in voltage resistance and at a practically defective level in terms of reliability as suggested by rupture in the element shape.

(Comparative example 5)

Except that the rate of relaxation performed after the transverse drawing step of the film production was 0%, the same procedure as in Example 1 was carried out to produce biaxial stretched polypropylene film. The biaxially orientated polypropylene film sample prepared in this Comparative example showed film characteristics and capacitor characteristics as given in Table 2, indicating that it was low in voltage resistance and at a practically defective level in terms of reliability as suggested by rupture in the element shape.

[Table 1]

[Table 1]

| | | Example 1 | Example 2 | Example 3 | Example 4 | Example 5 | Example 6 | Example 7 |
|---|---|---|---|---|---|---|---|---|
| Speed ratio between exit of longitudinal drawing step and entrance of transverse drawing step (%) | | 99.0 | 99.0 | 99.0 | 99.0 | 99.0 | 99.0 | 99.0 |
| Annealing treatment | temperature (°C) | 80 | 80 | 80 | 60 | 90 | - | 70 |
| | period (hours) | 10 | 5 | 72 | 10 | 10 | - | 24 |
| F5 value | MD (MPa) | 62 | 59 | 60 | 59 | 58 | 56 | 65 |
| | TD (MPa) | 117 | 110 | 112 | 112 | 105 | 104 | 117 |
| | MD+TD (MPa) | 179 | 169 | 172 | 171 | 163 | 160 | 182 |
| Heat shrinkage 120°C, 15 minutes | MD (%) | 0.9 | 1.6 | 0.8 | 1.8 | 0.8 | 2.0 | 1.2 |
| | TD (%) | -0.2 | -0.1 | -0.5 | 0.2 | -0.7 | 0.1 | -0.2 |
| Film thickness (µm) | | 2.4 | 2.4 | 2.4 | 2.4 | 2.4 | 2.3 | 2.4 |
| Film's dielectric breakdown voltage (V/µm) | | 776 | 713 | 755 | 702 | 698 | 658 | 781 |
| Capacitor characteristics 105°C | voltage resistance (V/µm) | 572 | 521 | 543 | 511 | 502 | 466 | 575 |
| | reliability | AA | AA | AA | AA | AA | A | AA |

[Table 2]

[Table 2]

| | | Comparative example 1 | Comparative example 2 | Comparative example 3 | Comparative example 4 | Comparative example 5 |
|---|---|---|---|---|---|---|
| Speed ratio between exit of longitudinal drawing step and entrance of transverse drawing step | (%) | 99.0 | 100.2 | 99.0 | 99.0 | 99.0 |
| Annealing treatment | temperature (°C) | 40 | - | 80 | 105 | 80 |
| | period (hours) | 10 | - | 108 | 108 | 10 |
| F5 value | MD (MPa) | 55 | 60 | 56 | - | 58 |
| | TD (MPa) | 98 | 92 | 97 | - | 110 |
| | MD+TD (MPa) | 153 | 152 | 153 | - | 168 |
| Heat shrinkage 120°C, 15 minutes | MD (%) | 1.9 | 2.2 | 0.6 | - | 2.8 |
| | TD (%) | 0.1 | 0.2 | -0.5 | - | 3.5 |
| Film thickness | ($\mu$m) | 2.4 | 2.3 | 2.4 | - | 2.4 |
| Film's dielectric breakdown voltage | (V/$\mu$m) | 613 | 602 | 667 | - | 720 |
| Capacitor characteristics 105°C | voltage resistance (V/$\mu$m) | 441 | 419 | 422 | - | 390 |
| | reliability | B | C | B | - | C |

EP 3 069 850 B1

13

**Claims**

1.  Biaxially orientated polypropylene film that has stress (TD-F5 value) of more than 100 MPa at 5% elongation in the film's width direction and heat shrinkage of 2% or less in the film's longitudinal direction when heat-treated at 120°C for 15 minutes.

2.  Biaxially orientated polypropylene film as claimed in claim 1 that has stress (MD-F5 value) of 58 MPa or more at 5% elongation in the film's longitudinal direction.

3.  Biaxially orientated polypropylene film as claimed in either claim 1 or 2, wherein the sum of the stress (TD-F5 value) at 5% elongation in the film's width direction and the stress (MD-F5 value) at 5% elongation in the film's longitudinal direction is 160 MPa or more.

4.  Biaxially orientated polypropylene film as claimed in any one of claims 1 to 3, wherein the heat shrinkage in the film's width direction after heat treatment at 120°C for 15 minutes is 1% or less.

5.  Biaxially orientated polypropylene film as claimed in any one of claims 1 to 4, wherein the film thickness is 0.5 $\mu$m or more and less than 3 $\mu$m.

6.  Metal-layer-laminated film comprising biaxially orientated polypropylene film as described in any one of claims 1 to 5 and a metal layer covering at least one surface thereof.

7.  A film capacitor comprising metal-layer-laminated film as described in claim 6.

8.  A production method for biaxially orientated polypropylene film as clamed in any one of claims 1 to 5 comprising a step for melt-extruding polypropylene resin onto a support to produce a polypropylene resin sheet, a step for subjecting this polypropylene resin sheet to sequential biaxial stretching in the order of longitudinal drawing and transverse drawing, and a step for subjecting it to heat treatment and relaxation treatment to provide biaxially orientated polypropylene film, the film conveyance speed at the entrance of the transverse drawing step being adjusted to 99.9% to 97.0% of the film conveyance speed at the exit of the longitudinal drawing step, transverse drawing being performed with the film edges held with clips, and subsequently heat treatment and relaxation treatment being performed while holding the film with clips under tension in the width direction.

9.  A production method for biaxially orientated polypropylene film as claimed in claim 8, wherein the biaxially orientated polypropylene film is subjected to annealing treatment and the annealing treatment is performed after the relaxation treatment as claimed in claim 8 for 3 to 100 hours in an atmosphere at a temperature more than 50°C and 100°C or less.

**Patentansprüche**

1.  Biaxial ausgerichteter Polypropylenfilm, der eine Spannung (TD-F5 -Wert) von mehr als 100 MPa bei 5%iger Dehnung in die Filmbreitenrichtung und eine Wärmeschrumpfung von 2% oder weniger in die Filmlängenrichtung bei einer Wärmebehandlung von 15 Minuten bei 120°C aufweist.

2.  Biaxial ausgerichteter Polypropylenfilm nach Anspruch 1, der eine Spannung (MD-F5 -Wert) von 58 MPa oder mehr bei 5%iger Dehnung in die Filmlängenrichtung aufweist.

3.  Biaxial ausgerichteter Polypropylenfilm nach entweder Anspruch 1 oder 2, wobei die Summe der Spannung (TD-F5 -Wert) bei 5%iger Dehnung in die Filmbreitenrichtung und die Spannung (MD-F5 -Wert) bei 5%iger Dehnung in die Filmlängenrichtung 160 MPa oder mehr ist.

4.  Biaxial ausgerichteter Polypropylenfilm nach einem der Ansprüche 1 bis 3, wobei die Wärmeschrumpfung in die Filmbreitenrichtung nach einer Wärmebehandlung von 15 Minuten bei 120°C 1% oder weniger beträgt.

5.  Biaxial ausgerichteter Polypropylenfilm nach einem der Ansprüche 1 bis 4, wobei die Filmdicke 0,5 $\mu$m oder mehr und weniger als 3 $\mu$m ist.

6.  Metallschichtlaminierter Film, umfassend einen biaxial ausgerichteten Polypropylenfilm, wie in einem der Ansprüche 1 bis 5 beschrieben, und eine Metallschicht, die mindestens eine Oberfläche desselben bedeckt.

7. Filmkondensator, umfassend einen, wie in Anspruch 6 beschriebenen, metallschichtlaminierten Film.

8. Herstellungsverfahren für einen biaxial ausgerichteten Polypropylenfilm nach einem der Ansprüche 1 bis 5, umfassend einen Schritt des Schmelzextrudierens von Polypropylenharz auf eine Auflage, um eine Polypropylenharzfolie herzustellen, einen Schritt des Aussetzens dieser Polypropylenharzfolie einem anschließenden biaxialen Dehnen in der Reihenfolge eines Längsziehens und eines Querziehen, und einen Schritt des Aussetzens derselben einer Wärmebehandlung und einer Relaxationsbehandlung, um biaxial ausgerichteten Polypropylenfilm bereitzustellen, wobei die Filmfördergeschwindigkeit am Beginn des Querzieh-Schrittes auf 99,9% bis 97,0% der Filmfördergeschwindigkeit am Ende des Längszieh-Schrittes eingestellt ist, wobei das Querziehen mit von Klemmen gehaltenen Filmkanten ausgeführt wird, und eine Wärmebehandlung und eine Relaxationsbehandlung in der Folge ausgeführt werden, während der Film mit Klemmen unter Spannung in die Breitenrichtung gehalten wird.

9. Herstellungsverfahren für einen biaxial ausgerichteten Polypropylenfilm nach Anspruch 8, wobei der biaxial ausgerichtete Polypropylenfilm einer Temperbehandlung ausgesetzt wird, und die Temperbehandlung nach der Relaxationsbehandlung nach Anspruch 8 3 bis 100 Stunden lang in einer Atmosphäre bei einer Temperatur von mehr als 50°C und 100°C oder weniger ausgeführt wird.

**Revendications**

1. Film de polypropylène biaxialement orienté qui a une charge (valeur TD-F5) de plus de 100 MPa à un allongement de 5 % dans la direction de la largeur du film et une contraction thermique de 2 % ou moins dans la direction longitudinale du film lorsqu'il est traité thermiquement à 120 °C pendant 15 minutes.

2. Film de polypropylène biaxialement orienté selon la revendication 1 qui a une charge (valeur MD-F5) de 58 MPa ou plus à un allongement de 5 % dans la direction longitudinale du film.

3. Film de polypropylène biaxialement orienté selon l'une ou l'autre de la revendication 1 ou 2, dans lequel la somme de la charge (valeur TD-F5) à un allongement de 5 % dans la direction de la largeur du film et de la charge (valeur MD-F5) à un allongement de 5 % dans la direction longitudinale du film est de 160 MPa ou plus.

4. Film de polypropylène biaxialement orienté selon l'une quelconque des revendications 1 à 3, dans lequel la contraction thermique dans la direction de la largeur du film après un traitement thermique à 120 °C pendant 15 minutes est de 1 % ou moins.

5. Film de polypropylène biaxialement orienté selon l'une quelconque des revendications 1 à 4, dans lequel l'épaisseur du film est de 0,5 $\mu$m ou plus et de moins de 3 $\mu$m.

6. Film stratifié contenant une couche de métal comprenant un film de polypropylène biaxialement orienté selon l'une quelconque des revendications 1 à 5 et une couche de métal recouvrant au moins une surface celui-ci.

7. Condensateur à film comprenant un film stratifié contenant une couche de métal selon la revendication 6.

8. Procédé de production d'un film de polypropylène biaxialement orienté selon l'une quelconque des revendications 1 à 5 comprenant une étape d'extrusion à l'état fondu d'une résine de polypropylène sur un support pour produire une feuille en résine de polypropylène, une étape de soumission de cette feuille en résine de polypropylène à un étirage biaxial séquentiel dans l'ordre étirage longitudinal puis étirage transversal, et une étape de soumission de celle-ci à un traitement thermique et à un traitement de relaxation pour fournir un film de polypropylène biaxialement orienté, la vitesse de transport du film à l'entrée de l'étape d'étirage transversal étant ajustée à 99,9 % à 97,0 % de la vitesse de transport du film à la sortie de l'étape d'étirage longitudinal, l'étirage transversal étant réalisé avec les bords du film maintenus par des pinces, et ensuite le traitement thermique et le traitement de relaxation étant réalisés tout en maintenant le film avec des pinces sous tension dans la direction de la largeur.

9. Procédé de production d'un film de polypropylène biaxialement orienté selon la revendication 8, dans lequel le film de polypropylène biaxialement orienté est soumis à un traitement de recuit et le traitement de recuit est réalisé après le traitement de relaxation selon la revendication 8 pendant 3 à 100 heures dans une atmosphère à une température supérieure à 50 °C et de 100 °C ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1167580 A
- JP H11273990 A
- WO 2004084242 A
- JP 2005064067 A
- JP 2007169595 A
- EP 1990353 A
- JP 2002234124 A
- EP 2590191 A
- JP 2011122142 A
- JP SHO62121704 B
- JP 2869606 B